Europäisches Patentamt

European Patent Office

Office européen des brevets

(11) Veröffentlichungsnummer: **0 343 353**
**A1**

## (12) EUROPÄISCHE PATENTANMELDUNG

(21) Anmeldenummer: 89106239.0

(51) Int. Cl.⁴: **G11B 23/087**

(22) Anmeldetag: 08.04.89

(30) Priorität: 21.04.88 DE 3813359

(43) Veröffentlichungstag der Anmeldung:
**29.11.89 Patentblatt 89/48**

(84) Benannte Vertragsstaaten:
**DE FR GB IT**

(71) Anmelder: **Agfa-Gevaert AG**

**D-5090 Leverkusen 1(DE)**

(72) Erfinder: **Breuer, Rudolf**
**Fleckhammerstrasse 40**
**D-8000 München 21(DE)**
Erfinder: **Lutz, Gottfried**
**Hauptstrasse 44a**
**D-8031 Seefeld(DE)**
Erfinder: **Pertzsch, Albert, Dipl.-Ing.**
**Leutstettener Strasse 29**
**D-8000 München 71(DE)**
Erfinder: **Schultz, Helmut,Dipl.-Ing.**
**Marthastrasse 19**
**D-8035 Gauting(DE)**

(54) **Magnetbandkassette.**

(57) Eine Magnetbandcassette, beispielsweise eine Audio-Cassette, die sich durch ein gefälliges äußeres Erscheinungsbild auszeichnet, besteht aus einem jeweils transparenten Boden-und Deckelteil (1,2) und enthält im Inneren zwei nebeneinanderliegende Bandwickel (3,4). Auf die Gehäusewände werden durch flächiges Bedrucken unterschiedliche Muster und/oder Farben sowie Bezeichnungen aufgebracht.

FIG.1

**EP 0 343 353 A1**

## Magnetbandcassette

Die Erfindung betrifft eine Magnetbandcassette mit zwei nebeneinanderliegenden Wickeln, die in einem Gehäuse zwischen zwei gegenüberliegenden transparenten Gehäusewänden drehbar gelagert sind, wobei die Gehäusewände transparente und opake Bereiche umfassen und wobei sich die Magnetbandcassette durch ein ansprechendes äußeres Erscheinungsbild auszeichnet.

Bei den bekannten Audio- und Video-Cassetten besteht das meist zweiteilig ausgeführte quaderförmige Cassettengehäuse aus opakem, meistens schwarz eingefärbtem Kunststoffmaterial, wobei meist rechteckig ausgebildete transparente Bereiche zur Beobachtung der Bandwickel auf einer oder vorzugsweise beiden Cassettenaußenseiten vorhanden sind. Dabei sind die transparenten Bereiche in das übrige opake Gehäuse eingeklebt oder eingeschweißt, wodurch Cassetten mit relativ geringer Dimensionsstabilität erhalten werden. Um diesen Nachteil zu beheben, werden die transparenten und die opaken Teile gleichzeitig gespritzt und so zusammen zu einer Einheit verbunden, was jedoch ein kostenaufwendiges Verfahren bedeutet. Ferner werden noch Etiketten und sonstige zum guten Erscheinungsbild der Cassette führende Felder aufgeklebt.

Bekannt sind auch Audio-Cassetten, bei denen die Gehäusewände aus einem Stück bestehen, vollständig transparent sind, wie beispielsweise in der US 4 267 986 und den DE-OS 30 19 441, 31 11 304, 36 14 898 beschrieben. Aus der EP 0 137 929 ist bekannt, die Gehäusewände einzufärben und so der Cassette ein gefälliges Äußeres zu verleihen. Aus dem DE-GM 76 28 256 ist bekannt, Teile der transparenten Cassettenwände durch Abkleben opak zu machen. Außerdem existieren Verfahren, die Cassettenwände farbig zu lackieren. Schließlich ist in der DE 36 04 261 beschrieben, Gehäuseteile zweischichtig nämlich aus beispielsweise einem transparenten und einer opaken Schicht bestehend auszubilden, die aufeinander laminiert sind.

Aus dem oben dargestellten Stand der Technik geht hervor, daß zur Herstellung einer Magnetbandcassette mit einem gefälligen äußeren Erscheinungsbild entweder mehrere aufeinanderfolgende Arbeitsgänge oder ein komplizierter Aufbau vonnöten ist, oder aber daß mechanische Mängel der Cassette in Kauf genommen werden müssen. Daher bestand die Aufgabe, eine Magnetbandcassette der eingangs genannten Art zu schaffen, welche nicht die aufgeführten Mängel aufweist und die einfach und kostengünstig herzustellen ist.

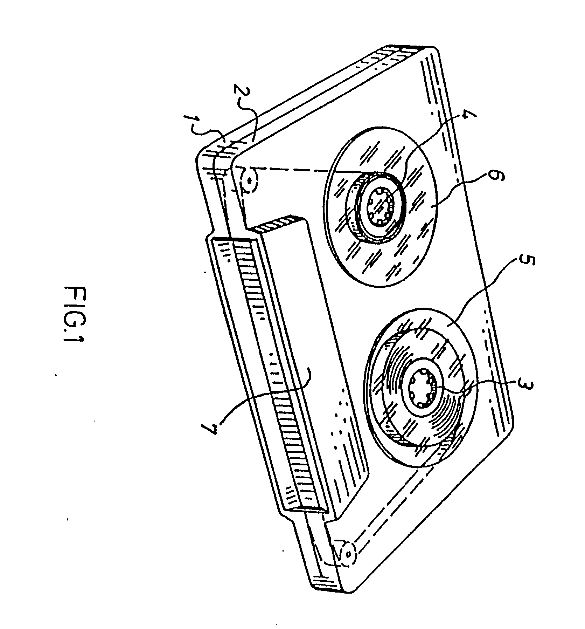

Erfindungsgemäß wurde die Aufgabe gelöst mit einer Cassette mit den im kennzeichnenden Teil des Anspruchs 1 genannten Merkmalen. Weitere Einzelheiten der Erfindung gehen aus den Unteransprüchen, der Beschreibung und der Zeichnung hervor.

Nachfolgend wird die Erfindung näher anhand der Zeichnung beschrieben und zwar zeigt die Figur eine im wesentlichen zweiteilig ausgeführte Audio-Cassette.

Die Erfindung wird nun anhand mehrerer Beispiele aufgrund der Figur beschrieben.

Beispiel 1

Eine Compact-Cassette, wie in der Figur dargestellt, ist im wesentlichen zweiteilig ausgeführt und besteht aus je einem transparenten Boden- und Deckelteil (1, 2) und den im Innenraum befindlichen Bandwickeln (5, 6), welche sich auf den Wickelkernen (3, 4) befinden. Die Kopfkammer (7) ist im Boden- beziehungsweise Deckelteil integriert. Die fertig zusammengesetzte Cassette wird nun mittels zweier gegenüberstehender Offset-Druckwerke beidseitig bedruckt, wobei die Kopfkammer sowie die übrigen Flächen mit Ausnahme der gewünschten durchsichtigen Bereiche (zum Beispiel Wickelbereich) (5, 6) opak beispielsweise schwarz bedruckt werden.

Beispiel 2

Eine Compact-Cassette gemäß Figur, wird in einer Serien-Fertigungslinie durch eine Transportstraße geführt und beidseitig mittels mehrerer hintereinander angeordneter jeweils paarweise gegenüberstehender Tampo-Druckwerke in mehreren aufeinanderfolgenden Schritten mit unterschiedlichen Mustern und/oder Farben einschließlich Etikett flächig bedruckt. Dabei können unterschiedliche Bereiche beziehungsweise die vorspringende Kopfkammer getrennt von den anderen Bereichen bedruckt werden. Es sind dabei Fertigungsgeschwindigkeiten bis zu 150 Takte pro Minute möglich.

Beispiel 3:

Beispiel 2 wird wiederholt, nur daß das Boden- und Deckelteil leicht eingefärbt war.

Compact-Cassetten, die gemäß den drei Beispielen hergestellt und bedruckt werden, erhalten ein gutes gefälliges Aussehen. Selbstverständlich läßt sich das Verfahren auch auf andere Cassetten-Typen ausdehnen, beispielsweise auf Video-Cassetten oder R-DAT-Cassetten. Außerdem können zusätzlich wie üblich Etiketten aufgeklebt und Beschriftungen aufgedruckt werden.

## Ansprüche

1. Magnetbandcassette, bestehend aus zwei nebeneinanderliegenden Wickelkernen, auf die Magnetband gewickelt ist, die in einem Gehäuse zwischen zwei gegenüberliegenden transparenten Gehäusewänden drehbar gelagert sind und wobei die Gehäusewände transparente oder leicht eingefärbte sowie opake Bereiche enthalten, dadurch gekennzeichnet, daß die undurchsichtigen Bereiche durch flächiges Bedrucken der Gehäusewände hergestellt werden.

2. Magnetbandcassette nach Anspruch 1, dadurch gekennzeichnet, daß die undurchsichtigen Bereiche durch Tampo-Druck oder Offset-Druck hergestellt werden.

3. Magnetbandcassette nach Anspruch 2, dadurch gekennzeichnet, daß eine oder gleichzeitig beide Cassettenseiten durch mehrfaches Bedrucken unterschiedlicher Muster und/oder Farben sowie Bezeichnungen behandelt werden.

4. Magnetbandcassette nach Anspruch 1 bis 3, dadurch gekennzeichnet, daß zusätzlich auf die Gehäusewände Etiketten aufgeklebt werden und/oder Beschriftungen aufgedruckt werden.

FIG.1

A-G5358

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN Band 10, Nr. 89 (P-444)[2146] 8. April 1986; & JP - A - 60 224176 (KONIKA MAGUNETEITSUKUSU K.K.) 08.11.1985 --- | 1 | G 11 B 23/087 G 11 B 23/38 |
| D,Y | DE-U-7 628 256 (AGFA-GEVAERT AG) * Ansprüche 1-3; Figur * --- | 1 | |
| A | DE-A-2 125 492 (VICTOR CO. OF JAPAN LTD.) * Ansprüche 1-3 * --- | 1 | |
| A | DE-U-7 300 628 (PAMPUS KG) * Ansprüche 1-3; Figur 1 * --- | 1 | |
| A | GB-A-2 101 556 (J A. H. FRIEDA) * Ansprüche 1-4; Figuren 1,2 * ----- | 4 | |
| | | | **RECHERCHIERTE SACHGEBIETE (Int. Cl.4)** G 11 B 23/00 |

Der vorliegende Recherchenbericht wurde für alle Patentansprüche erstellt

| Recherchenort | Abschlußdatum der Recherche | Prüfer |
|---|---|---|
| BERLIN | 22-08-1989 | BERNAS Y.N.E. |